# EUROPÄISCHE PATENTANMELDUNG

(11) **EP 3 316 342 A1**
(43) Veröffentlichungstag der Anmeldung: **02.05.2018**
(21) Anmeldenummer: 17196062.8
(22) Anmeldetag: 12.10.2017
(51) Int. Cl.: H01M 2/10

(54) **BATTERIEZELLHALTER ZUR FEDERELASTISCHEN AUFNAHME MINDESTENS EINER BATTERIEZELLE, BATTERIEMODULGEHÄUSE UND BATTERIEMODUL SOWIE VERFAHREN ZUR HERSTELLUNG DES BATTERIEMODULS**

(30) Priorität: 25.10.2016 DE 102016220989
(71) Anmelder: Robert Bosch GmbH, 70442 Stuttgart (DE)
(72) Erfinder: Lutz, Juergen, 71282 Hemmingen (DE); Wolff, Jochen, 71679 Asperg (DE); Zink, Markus, 70439 Stuttgart (DE)

(57) **Zusammenfassung**

Die vorliegende Erfindung betrifft einen Batteriezellhalter und ein Batteriemodulgehäuse zur federelastischen Aufnahme mindestens einer Batteriezelle sowie ein Batteriemodul und ein Verfahren zur Herstellung des Batteriemoduls.

Der Batteriezellhalter umfasst eine Oberseite, welche zur Aufnahme wenigstens einer Batteriezelle mindestens eine Vertiefung aufweist. In einem unteren Bereich und an einer Innenwand der Vertiefung ist wenigstens ein Federelement angeordnet, wodurch der Batteriezellhalter dazu eingerichtet ist, in der Vertiefung eine Batteriezelle in einer Längsrichtung der Batteriezelle federelastisch aufzunehmen. Das Federelement und der Batteriezellhalter umfassen dabei ein Polymermaterial. Vorteilhafterweise können das Federelement und der Batteriezellhalter somit in einem Spritzguss-Prozess zusammen hergestellt werden. Die Aufnahme von Batteriezellen erfolgt kraftschlüssig und lösbar, wodurch auch Maßtoleranzen einer aufgenommenen Batteriezelle ausgeglichen werden können. Des Weiteren wird die Erzeugung einer Federkraft auf eine Batteriezelle funktional von einer elektrischen Kontaktierung der Batteriezelle getrennt, so dass die mechanische Belastung eines elektrischen Kontaktes zur Batteriezelle reduziert wird.

## Beschreibung

Die vorliegende Erfindung betrifft einen Batteriezellhalter und ein Batteriemodulgehäuse zur federelastischen Aufnahme mindestens einer Batteriezelle sowie ein Batteriemodul und ein Verfahren zur Herstellung des Batteriemoduls.

### Stand der Technik

Batteriemodule für Elektrofahrzeuge weisen typischerweise im Inneren einen Halter zur Aufnahme von Batteriezellen auf. Häufig werden die Batteriezellen von federelastischen, elektrischen Kontakten kraftschlüssig in Längsrichtung gehalten, wodurch der elektrische Kontakt bei mechanischen Vibrationen oder Stößen mechanisch belastet wird.

### Offenbarung der Erfindung

Der Batteriezellhalter umfasst eine Oberseite, welche zur Aufnahme wenigstens einer Batteriezelle mindestens eine Vertiefung aufweist. In einem unteren Bereich und an einer Innenwand der Vertiefung ist wenigstens ein Federelement angeordnet. Dadurch ist der Batteriezellhalter dazu eingerichtet, in der Vertiefung eine Batteriezelle in einer Längsrichtung der Batteriezelle federelastisch aufzunehmen. Das Federelement und der Batteriezellhalter umfassen dabei ein Polymermaterial. Vorteilhafterweise können das Federelement und der Batteriezellhalter somit in einem Spritzguss-Prozess zusammen hergestellt werden. Die Aufnahme von Batteriezellen erfolgt kraftschlüssig und lösbar, wodurch auch Maßtoleranzen einer aufgenommenen Batteriezelle ausgeglichen werden können. Des Weiteren wird die Erzeugung einer Federkraft auf eine Batteriezelle funktional von einer elektrischen Kontaktierung der Batteriezelle getrennt, so dass die mechanische Belastung eines elektrischen Kontaktes zur Batteriezelle reduziert wird.

In einer Ausgestaltung der Erfindung ist das Federelement mindestens an einer Innenwand der Vertiefung in einer Ebene senkrecht zu einer Tiefe der Vertiefung als Balken ausgebildet. Die Federkraft wird durch Biegung des Federelements erzeugt. Ein balkenförmiges Federelement ist durch ein Spritzgussverfahren zusammen mit dem Batteriehalter leicht herzustellen.

In einer bevorzugten Ausgestaltung der Erfindung ist das Federelement mindestens an einer Innenwand der Vertiefung in einer Ebene senkrecht zu einer Tiefe der Vertiefung als Öse ausgebildet, d.h. das Federelement ist bogenförmig ausgestaltet, wobei beide Bogenenden eine Innenwand der Vertiefung kontaktieren. Auch in dieser Ausgestaltung wird die Federkraft durch Biegung des ösenförmigen Federelements erzeugt. Die Ösenform des Federelements erlaubt eine Freihaltung des elektrischen Kontaktes zur elektrischen Kontaktierung der Batteriezelle bei erhöhtem Federweg und hoher Federkraft des Federelements.

In einer Weiterführung der Erfindung ist an dem Federelement und in Richtung der Oberseite des Batteriezellhalters ein Federkontaktelement ausgebildet. Das Federkontaktelement ist dazu eingerichtet, bei einer federelastischen Aufnahme einer Batteriezelle die Batteriezelle mechanisch zu kontaktieren, d.h. die Federkraft von dem Federelement auf die Batteriezelle zu übertragen. Das Federkontaktelement ist beispielsweise an einem Endbereich eines einseitig eine Innenwand kontaktierenden, balkenförmigen Federelements angeordnet. Das Federkontaktelement kann alternativ in einem Mittelbereich eines beidseitig eine Innenwand kontaktierenden, balkenförmigen Federelements oder an einem Scheitelpunkt eines ösenförmigen Federelements angeordnet sein. Durch die Wahl der Höhe des Federkontaktelements kann beispielsweise ein Federweg des Federelements sowie die elastische Verformung bzw. die Federkraft des Federelements eingestellt werden.

In einer besonders bevorzugten Ausgestaltung ist an einer Innenwand der Vertiefung ein Anschlagselement ausgebildet. Das Anschlagselement stellt einen mechanischen Anschlag für das Federelement oder für eine aufgenommene Batteriezelle dar. Es begrenzt in beiden Ausführungsformen eine Biegung des Federelements, wodurch eine Materialermüdung des Federelements verhindert werden kann.

Die Erfindung betrifft außerdem ein Batteriemodulgehäuse. Das Batteriemodulgehäuse weist wenigstens den Batteriezellhalter auf. Zusätzlich umfasst das Batteriemodulgehäuse einen Deckel, welcher an der Oberseite des Batteriezellhalters angeordnet ist. Das Batteriemodulgehäuse ist dazu eingerichtet, eine Batteriezelle federelastisch aufzunehmen, wobei der Deckel eine Batteriezelle im Batteriezellhalter mechanisch in Längsrichtung der Batteriezelle fixiert.

Das Batteriemodul umfasst mindestens das Batteriemodulgehäuse und wenigstens eine Batteriezelle. Die Batteriezelle ist zwischen dem Batteriezellhalter und dem Deckel in der Vertiefung des Batteriezellhalters federelastisch aufgenommen.

In einer Ausgestaltung des Batteriemoduls ist der Batteriezellhalter kraft- und/oder formschlüssig mit dem Deckel verbunden, wodurch die Batteriezelle mechanisch in dem Batteriemodul fixiert wird. Das Batteriemodul kann vorteilhafterweise in dieser Ausgestaltung in einem weiteren Gehäuse frei von äußeren Kräften aufgenommen werden, beispielsweise ebenfalls federelastisch.

In einer besonders bevorzugten Ausgestaltung ist der Batteriezellhalter des Batteriemodulgehäuses ein erster Batteriezellhalter und der Deckel ein zweiter Batteriezellhalter, wobei die Oberseite des ersten Batteriezellhalters und die Oberseite des zweiten Batteriezellhalters zueinander weisend angeordnet sind. Durch diese Ausgestaltung wird eine Batteriezelle beidseitig, d.h. in einer Vertiefung des ersten Batteriezellhalters und in einer Vertiefung des zweiten Batteriezellhalters, in Längsrichtung federelastisch aufgenommen. In dieser Ausgestaltung können mechanische Vibrationen und/oder Schocks in Längsrichtung der Batteriezelle gut abgefedert werden, so dass ein elektrischer Kontakt zur Batteriezelle in Längsrichtung nur minimal belastet wird.

In einer Weiterführung des Batteriemoduls sind der erste Batteriezellhalter und der zweite Batteriezellhalter identisch ausgebildet. Der erste Batteriezellhalter und der zweite Batteriezellhalter können demnach durch eine Spritzgussform hergestellt werden, wodurch Werkzeugkosten, Lagerkosten und Rüstkosten in der Fertigung des Batteriezellhalters reduziert werden.

Das erfindungsgemäße Verfahren zur Herstellung des Batteriemoduls umfasst eine Bereitstellung des ersten Batteriezellhalters sowie eine Einbringung zumindest einer Batteriezelle in den ersten Batteriezellhalter. Anschließend erfolgt eine Anordnung eines Deckels an der Oberseite des ersten Batteriezellhalters. Bevorzugt erfolgt die Anordnung eines zweiten Batteriezellhalters als Deckel. Abschließend wird der erste Batteriezellhalter kraft- und/oder formschlüssig mit dem Deckel verbunden, wodurch eine Federkraft zur federelastischen Aufnahme der Batteriezelle in der Vertiefung des ersten Batteriezellhalters erzeugt wird.

Die vorliegende Erfindung wird nachfolgend anhand bevorzugter Ausführungsformen und beigefügter Zeichnungen erläutert.
- Figur 1a:: Querschnitt eines Batteriezellhalters
- Figur 1b:: Querschnitt eines Batteriezellhalters mit Batteriezellen
- Figur 1c:: Querschnitt eines Batteriezellhalters mit gebogenem Federelement
- Figur 2a:: Querschnitt eines weiteren Batteriezellhalters
- Figur 2b:: Aufsicht einer Unterseite des Batteriezellhalters
- Figur 2c:: Aufsicht einer alternativen Unterseite des Batteriezellhalters mit bogenförmigem Federelement
- Figur 3:: Batteriemodul im Querschnitt
- Figur 4:: Batteriemodul mit zweitem Batteriezellhalter als Deckel
- Figur 5a:: dreidimensionale Ansicht eines 48V-Batteriemoduls
- Figur 5b:: dreidimensionale Ansicht einer Vertiefung des 48V-Batteriemoduls
- Figur 6:: Ablaufdiagramm zur Herstellung eines Batteriemoduls

### Ausführungsbeispiele

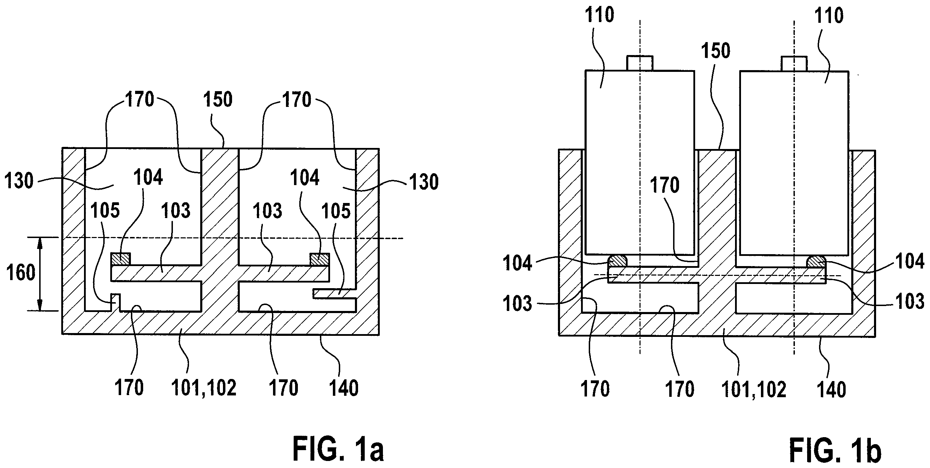

In Figur 1a ist ein Querschnitt eines Batteriezellhalters 101 und 102 dargestellt. Der Batteriezellhalter 101 und 102 weist eine Unterseite 140 und eine Oberseite 150 auf. Die Oberseite 150 umfasst zwei Vertiefungen 130. Bevorzugt umfasst der Batteriezellhalter 101 und 102 eine Vielzahl von Vertiefungen 130. Jede Vertiefung 130 umfasst jeweils mindestens eine Innenwand 170 und ein Federelement 103 sowie optional ein Anschlagselement 105. Das Federelement 103 ist in einem unteren Bereich der Vertiefung an einer Innenwand 170 angeordnet, wobei der untere Bereich durch eine Höhe bzw. Abstand 160 von beispielsweise *0,05* - *2 cm* von der Unterseite 140 des Batteriezellhalters 101 und 102 definiert ist. Der Batteriezellhalter 101 und 102 und das Federelement 103 können bevorzugt aus Polyamid oder einem anderen Polymermaterial gemeinsam in einem Spritzgießprozess hergestellt sein. In einer alternativen Ausführungsform ist das Federelement 103 ein Einlegeteil im Spritzgießverfahren, so dass das Federelement 103 und der Batteriezellhalter 101 und 102 jeweils ein Polymermaterial umfassen, wobei sich das erste Polymermaterial des Federelements 103 und das zweite Polymermaterial des Batteriezellhalters 101 und 102 unterscheiden. Das Federelement 103 kann beispielsweise ein erstes Polymermaterial mit einer höheren Steifigkeit oder Elastizität als das zweite Polymermaterial aufweisen. Das Federelement 103 kann balken- oder ösenförmig bzw. bogenförmig ausgestaltet sein und ein zusätzliches, optionales Federkontaktelement 104 aufweisen, welches an dem Federelement 103 und in Richtung der Oberfläche 150 ausgebildet ist. Die Federkraft wird bevorzugt durch eine Biegung des Federelements 103 erzeugt. Der Batteriezellhalter 101 und 102 ist dazu eingerichtet, pro Vertiefung 130 eine Batteriezelle mittels eines Federelementes 103 federelastisch aufzunehmen. Es können alternativ mehrere Federelemente 103 pro Vertiefung 130 angeordnet sein. Die Form der Vertiefung 130 ist abhängig von einer aufzunehmenden Batteriezelle, sie kann beispielsweise zylindrisch sein. Die untere Innenwand 170 entspricht in diesem Beispiel dem Boden der Vertiefung 130. Die in Figur 1a unterschiedlichen Ausführungen eines optionalen Anschlagselements 105 begrenzen jeweils den Federweg des Federelements 103 durch einen Anschlag des Federelements 103 oder einer Batteriezelle 110 bei entsprechender Durchbiegung des Federelements 103. In der linken Vertiefung 130 ist das Anschlagselement 105 am Boden der Vertiefung 130 und in der rechten Vertiefung 130 ist das Anschlagselement 105 an der seitlichen Innenwand 170 der Vertiefung angeordnet.

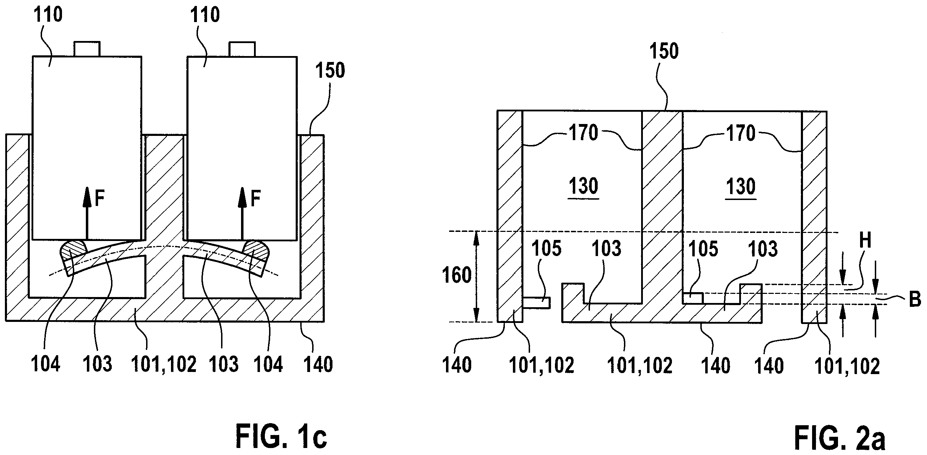

In Figur 1b und Figur 1c ist ein Batteriezellhalter 101 und 102 mit abgerundeten Federkontaktelementen 104 sowie mit zwei aufgenommenen, zylindrischen Batteriezellen 110 dargestellt. Die Federkontaktelemente 104 sind jeweils an dem Ende eines balkenförmigen Federelements 103 angeordnet. Eine Kontaktierung und eine Kraftübertragung einer Federkraft F in Längsrichtung der Batteriezellen 110 von dem Federelement 103 auf die Batteriezelle 110 erfolgt demnach mittels des Federkontaktelements 104. Im Vergleich zwischen Figur 1b und Figur 1c wird das Federelement 103 durch Vibrationen oder einen mechanischen Schlag auf Biegung beansprucht, d.h. das Ende bzw. der Scheitelpunkt des Federelements 103 wird in Figur 1c gegenüber Figur 1b verlagert und es resultiert eine Federkraft F entgegen der mechanischen Belastung durch die Biegung des Federelements 103 in Längsrichtung der Batteriezelle 110.

In Figur 2a ist eine alternative Ausführungsform des Batteriezellhalters 101 und 102 dargestellt. Die Vertiefungen 130 der Oberfläche 150 weisen keinen geschlossenen Boden sondern lediglich seitliche Innenwände 170 auf. Das Federelement 103 repräsentiert demnach auch ein Stützelement in der Vertiefung 130. Eine Ausführung nach Figur 2a erlaubt eine geringere Höhe des Batteriezellhalters 101 und 102. Das optionale Anschlagselement 105 zur Begrenzung einer Durchbiegung des Federelements 103 ist als mechanischer Anschlag für die Batteriezellen 110 und an der seitlichen Innenwand 170 ausgebildet. Das Anschlagselement 105 kann direkt an dem Federelement 103 oder benachbart zu dem Federelement 103 angeordnet sein. Es begrenzt in diesem Fall einen Federweg des Federelements 103 auf die Differenz zwischen der Höhe H des Federkontaktelements 104 und der Höhe B des Anschlagselements 105.

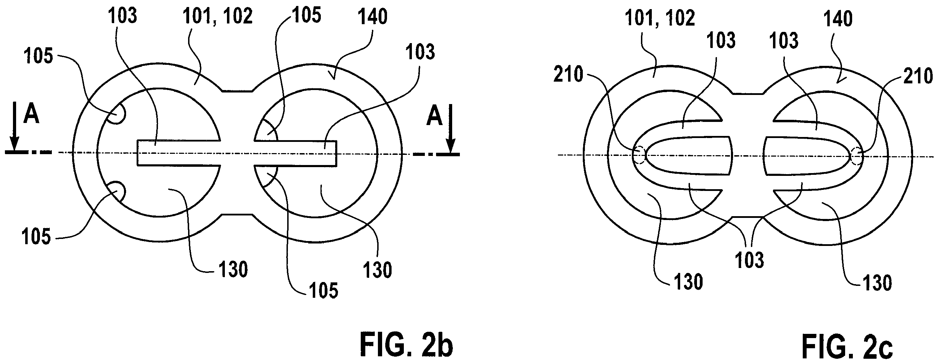

In Figur 2b ist der Batteriezellhalter 101 und 102 von unten, d.h. eine Aufsicht der Unterseite 140 dargestellt. Es wird deutlich, dass der Batteriezellhalter 101 und 102 dazu eingerichtet ist, zylindrische Batteriezellen 110 in der Vertiefung 130 aufzunehmen. Außerdem sind ein balkenförmiges Federelement 103, die Anschlagselemente 105 an der Innenwand 170 sowie die in Figur 2a dargestellte Querschnittsebene A-A zu erkennen.

In Figur 2c ist ebenfalls ein Batteriezellhalter 101 und 102 in einer Aufsicht der Unterseite 140 dargestellt. Charakteristisch an diesem Ausführungsbeispiel ist die bevorzugte Ausbildung des Federelements 103 als Öse bzw. bogenförmiger Balken, wodurch ein elektrischer Kontakt einer aufzunehmenden Batteriezelle 110 von unten zur elektrischen Kontaktierung der Batteriezelle 110 zugänglich ist. Das ösenförmige Federelement 103 weist im Bereich 210, d.h. im Bereich des Scheitelpunktes des ösen- bzw. bogenförmigen Federelements 103, in Richtung der Oberseite 150 ein Federkontaktelement 105 auf (gestrichelt eingezeichnet, von unten nicht sichtbar).

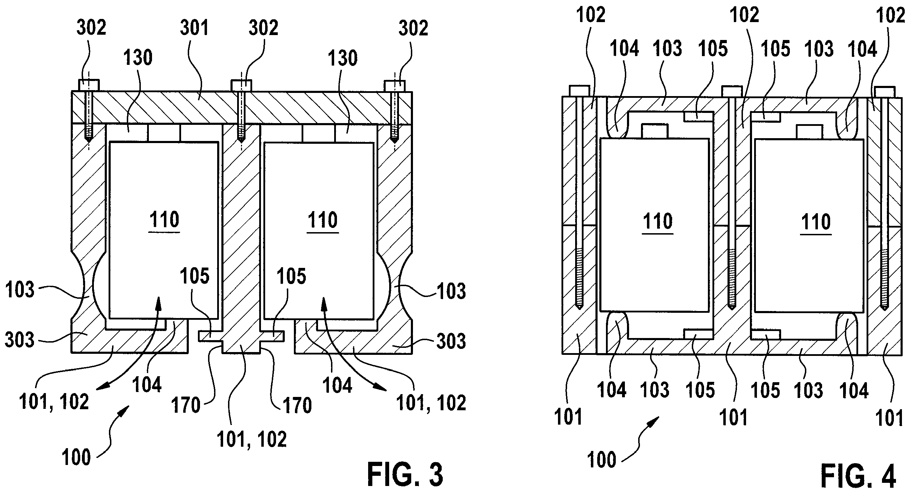

In Figur 3 ist ein Batteriemodul 100 mit einem Batteriezellhalter 101 und 102 und einem Deckel 301 dargestellt. Der Deckel 301 ist mit Schraubverbindungen 302 an den Batteriezellhalter 101 und 102 kraftschlüssig fixiert, wodurch die zwei Batteriezellen 110 in den Vertiefungen 130 in Längsrichtung der Batteriezellen 110 fixiert werden. Die Federelemente 103 des Batteriezellhalters 101,102 sind in diesem Beispiel in dem unteren Bereich der Vertiefung 130 an einer seitlichen Innenwand des Batteriezellhalters 101,102 angeordnet, sodass die Federwirkung bzw. die Federkraft F durch eine Verlagerung eines Stützelements 303 des Batteriezellhalters 101,102 erfolgt. Dargestellt sind außerdem Anschlagselemente 105 an einer seitlichen Innenwand 170 der Vertiefung 130. Der Batteriezellhalter 101 bzw. 102 des Batteriemoduls 100 kann als Gestell mit einer Vielzahl von Öffnungen ausgeführt sein, d.h. beispielsweise durch Streben dazu eingerichtet sein, eine Batteriezelle in Querrichtung zu halten.

In Figur 4 ist ein Batteriemodul 100 mit einem ersten Batteriezellhalter 101 und einem zweiten Batteriezellhalter 102 als Deckel sowie mit zwei Batteriezellen 110 dargestellt, wobei der erste Batteriezellhalter 101 und der zweite Batteriezellhalter 102 eine identische Ausführungsform aufweisen. Jeder Batteriezellhalter 101,102 weist pro Vertiefung 130 ein Federelement 103 mit einem Federkontaktelement 104 und einem Anschlagselement 105 auf. Der erste Batteriezellhalter 101 und der zweite Batteriezellhalter 102 sind kraft- und/oder formschlüssig mittels Fixierelementen aneinander fixiert, beispielsweise, wie dargestellt, durch Schraubverbindungen 302. Die Federelemente 103 sind dazu eingerichtet Vibrationen des Batteriemoduls bzw. mechanische Stöße zu dämpfen, so dass mechanische Belastungen an elektrischen Kontakten (nicht dargestellt) zu den Batteriezellen 110 minimiert werden. Die Anschlagselemente 105 begrenzen die Biegung der Federelemente 103 durch einen mechanischen Anschlag der Batteriezellen 110 um eine Materialermüdung der Federelemente 103 zu verhindern bzw. den Federweg der Federelemente 103 zu begrenzen.

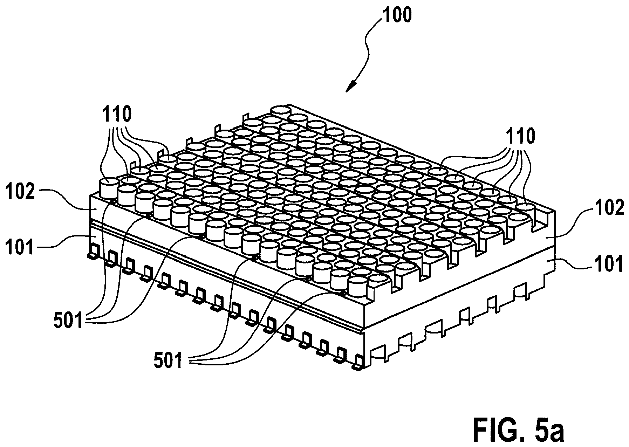

In Figur 5a ist ein 48V-Batteriemodul 100 dreidimensional dargestellt. Das Batteriemodul 100 weist einen ersten Batteriezellhalter 101 und einen zweiten Batteriezellhalter 102 auf, wobei der erste und zweite Batteriezellhalter 101 und 102 eine identische Ausformung aufweisen. Die identische Ausformung ermöglicht die Herstellung des ersten Batteriezellhalters 101 und des zweiten Batteriezellhalters 102 mit einem Spritzguss-Werkzeug, wodurch Fertigungskosten reduziert werden. Die Oberseite 150 des ersten Batteriezellhalters 101 weist in Richtung der Oberseite 150 des zweiten Batteriezellhalters 102, d.h. die Batteriezellhalter 101 und 102 stehen mit der jeweiligen Oberseite 150 in Kontakt. Das Batteriemodul 100 umfasst in diesem Ausführungsbeispiel jeweils 195 Batteriezellen 110, wobei jede Batteriezelle 110 in einer Vertiefung 130 des ersten Batteriezellhalters 101 und in einer Vertiefung 130 des zweiten Batteriezellhalters 102 in Längsrichtung der Batteriezelle 110 federelastisch aufgenommen ist. Alternativ kann das Batteriemodul 100 eine andere Anzahl von Batteriezellen 110 umfassen. Der erste Batteriezellhalter 101 und der zweite Batteriezellhalter 102 sind durch Verschraubungen als Fixierelemente 501 aneinander kraftschlüssig fixiert.

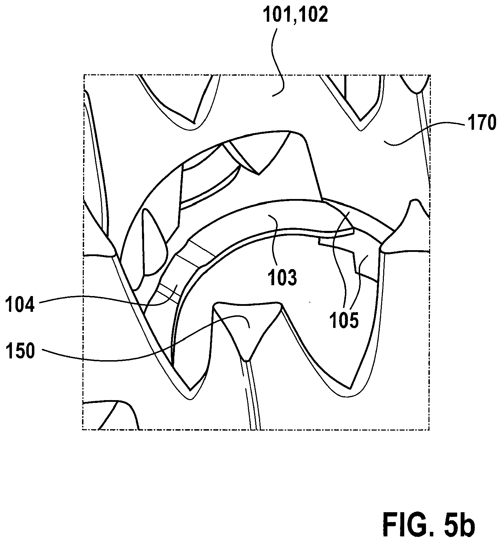

In Figur 5b ist der Batteriezellhalter 101, 102 aus Figur 5a in einer Detailansicht dreidimensional ohne Batteriezelle 110 abgebildet, wobei die Detailansicht eine leere Vertiefung 130 von der Oberseite 150 aus zeigt. Der Batteriezellhalter 101 und 102 weist eine rippenförmige Struktur auf, d.h. die Vertiefung 130 bzw. die Innenwand 170 ist nicht geschlossen. Das Anschlagselement 105 ist an dem Federelement 103 an einer Innenwand 170 der Vertiefung 130 ausgeführt. Das Federelement 103 weist ein Federkontaktelement 104 am Scheitelpunkt des ösenförmigen bzw. bogenförmigen Federelements 103 auf.

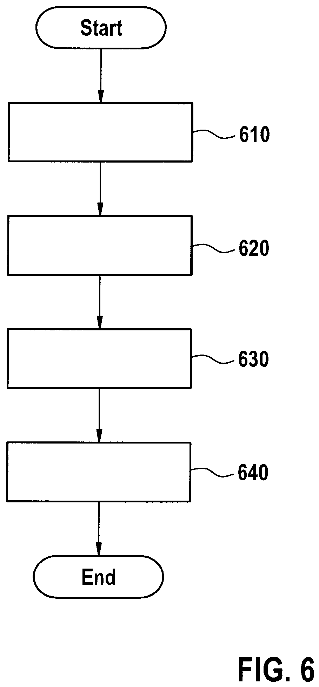

In Figur 6 ist das erfindungsgemäße Verfahren zur Herstellung des Batteriemoduls 100 dargestellt. Im ersten Schritt erfolgt die Bereitstellung 610 des ersten Batteriezellhalters 101. Anschließend wird in dem Schritt 620 jeweils mindestens eine Batteriezelle 110 in die wenigstens eine Vertiefung 130 des unteren Batteriezellhalters 101 eingebracht. Im nachfolgenden Schritt erfolgt die Anordnung 630 des zweiten Batteriezellhalters 102 auf dem ersten Batteriezellhalter 101. Bevorzugt sind zur Ausrichtung des zweiten Batteriezellhalter 102 an den ersten Batteriezellhalter 101 an dem ersten Batteriezellhalter 101 und/oder dem zweiten Batteriezellhalter 102 Führungselemente bzw. Nuten vorgesehen. Abschließend wird im Schritt 640 der zweite Batteriezellhalter 102 mit dem ersten Batteriezellhalter 101 kraft- und/oder formschlüssig verbunden. Die Verbindung 640 erfolgt bevorzugt reversibel durch eine Schraubverbindung oder eine Rastverbindung.

## Patentansprüche

1. Batteriezellhalter (101), umfassend
• eine Oberseite (150), wobei die Oberseite (150) des Batteriezellhalters (101) zur Aufnahme einer Batteriezelle (110) mindestens eine Vertiefung (130) umfasst,
**dadurch gekennzeichnet, dass** der Batteriezellhalter (101)
• wenigstens ein Federelement (103) aufweist, welches in einem unteren Bereich (160) an einer Innenwand (170) der Vertiefung (130) ausgebildet ist, so dass der Batteriezellhalter (101) dazu eingerichtet ist, eine Batteriezelle (110) in einer Längsrichtung der Batteriezelle (110) in der Vertiefung (130) federelastisch aufzunehmen, wobei das Federelement (103) und der Batteriezellhalter (101) ein Polymermaterial umfassen.

2. Batteriezellhalter (101) nach Anspruch 1, **dadurch gekennzeichnet, dass** das Federelement (103) in einer Ebene senkrecht zu einer Tiefe (T) der Vertiefung (130) als Balken ausgebildet ist.

3. Batteriezellhalter (101) nach Anspruch 1, **dadurch gekennzeichnet, dass** das Federelement (103) in einer Ebene senkrecht zu einer Tiefe (T) der Vertiefung (130) als Öse ausgebildet ist.

4. Batteriezellhalter (101) nach einem der vorhergehenden Ansprüche, **dadurch gekennzeichnet, dass** an dem Federelement (103) ein Federkontaktelement (104) angeordnet ist, wobei das Federkontaktelement (104) vom Federelement (103) in Richtung der Oberseite (150) ausgebildet und dazu eingerichtet ist, bei einer federelastischen Aufnahme einer Batteriezelle (110) die Federkraft (F) auf die Batteriezelle (110) zu übertragen.

5. Batteriezellhalter (101) nach einem der vorhergehenden Ansprüche, **dadurch gekennzeichnet, dass** der Batteriezellhalter (101) ein Anschlagselement (105) an einer Innenwand (170) der Vertiefung (130) zur Begrenzung der Biegung des Federelements (103) durch einen mechanischen Anschlag des Federelements (103) oder der Batteriezelle (110) aufweist.

6. Batteriemodulgehäuse, wenigstens aufweisend
• einen Batteriezellhalter (101) nach einem der Ansprüche 1 bis 5, und
• einen Deckel (301), welcher an der Oberseite (150) des Batteriezellhalters (101) angeordnet ist.

7. Batteriemodul (100), mindestens umfassend
• ein Batteriemodulgehäuse nach Anspruch 6, welches einen ersten Batteriezellhalter (101) und einen Deckel (301) umfasst, und
• mindestens eine Batteriezelle (110), welche zwischen dem ersten Batteriezellhalter (101) und dem Deckel (301) in der Vertiefung des ersten Batteriezellhalters (101) federelastisch aufgenommen ist.

8. Batteriemodul (100) nach Anspruch 7, **dadurch gekennzeichnet, dass** der erste Batteriezellhalter (101) kraft- und/oder formschlüssig mit dem Deckel (301) verbunden ist.

9. Batteriemodul (100) nach einem der Ansprüche 7 oder 8, **dadurch gekennzeichnet, dass** der Deckel (301) ein zweiter Batteriezellhalter (102) nach einem der Ansprüche 1 bis 5 ist, wobei eine Oberseite (150) des ersten Batteriezellhalters (101) und eine Oberseite (150) des zweiten Batteriezellhalters (102) zueinander weisend angeordnet sind.

10. Batteriemodul (100) nach Anspruch 9, **dadurch gekennzeichnet, dass** der erste Batteriezellhalters (101) des Batteriemodulgehäuses und der zweite Batteriezellhalter (102) identisch ausgebildet sind.

11. Verfahren zur Herstellung eines Batteriemoduls nach einem der Ansprüche 7 bis 10, umfassend folgende Schritte
• Bereitstellung (610) eines ersten Batteriezellhalters (101) nach einem der Ansprüche 1 bis 5, und
• Einbringung (620) zumindest einer Batteriezelle (110) in den ersten Batteriezellhalter (101), und
• Anordnung (630) eines Deckels (301) an einer Oberseite (150) des ersten Batteriezellhalters (101), und
• kraft- und/oder formschlüssige Verbindung (640) des ersten Batteriezellhalters (102) an den Deckel (301), wodurch eine Federkraft (F) zu einer federelastischen Aufnahme der Batteriezelle (110) in einer Vertiefung des ersten Batteriezellhalters (101) erzeugt wird.

12. Verfahren nach Anspruch 11, **dadurch gekennzeichnet, dass** die Anordnung (630) eines zweiten Batteriezellhalters (101) nach einem der Ansprüche 1 bis 5 als Deckel an der Oberseite (150) des ersten Batteriezellhalters (101) erfolgt.

## Geänderte Patentansprüche

### Geänderte Patentansprüche gemäss Regel 137(2) EPÜ.

1. Batteriemodul (100), mindestens umfassend
• ein Batteriemodulgehäuse, welches einen ersten Batteriezellhalter (101) und einen Deckel (301) umfasst, wobei der Batteriezellhalter (101) wenigstens folgende Komponenten aufweist
a) die Oberseite (150), wobei die Oberseite (150) des Batteriezellhalters (101) zur Aufnahme einer Batteriezelle (110) mindestens eine Vertiefung (130) umfasst,
b) wenigstens ein Federelement (103), welches in einem unteren Bereich (160) an einer Innenwand (170) der Vertiefung (130) ausgebildet ist, so dass der Batteriezellhalter (101) dazu eingerichtet ist, eine Batteriezelle (110) in einer Längsrichtung der Batteriezelle (110) in der Vertiefung (130) federelastisch aufzunehmen, wobei das Federelement (103) und der Batteriezellhalter (101) ein Polymermaterial umfassen,
• mindestens eine Batteriezelle (110), welche zwischen dem ersten Batteriezellhalter (101) und dem Deckel (301) in der Vertiefung des ersten Batteriezellhalters (101) federelastisch aufgenommen ist,
**dadurch gekennzeichnet, dass**
• der Deckel (301) ein zweiter Batteriezellhalter (102) ist, wobei eine Oberseite (150) des ersten Batteriezellhalters (101) und eine Oberseite (150) des zweiten Batteriezellhalters (102) zueinander weisend angeordnet sind, und
• wobei jede Batteriezelle (110) in einer Vertiefung (130) des ersten Batteriezellhalters (101) und in einer Vertiefung des zweiten Batteriezellhalters (102) in Längsrichtung der Batteriezelle (110) beidseitig federelastisch aufgenommen ist.

2. Batteriemodul (100) nach Anspruch 1, **dadurch gekennzeichnet, dass** das Federelement (103) des Batteriezellhalters (101, 102) in einer Ebene senkrecht zu einer Tiefe (T) der Vertiefung (130) als Balken ausgebildet ist.

3. Batteriemodul (100) nach Anspruch 1, **dadurch gekennzeichnet, dass** das Federelement (103) des Batteriezellhalters (101, 102) in einer Ebene senkrecht zu einer Tiefe (T) der Vertiefung (130) als Öse ausgebildet ist.

4. Batteriemodul (100) nach einem der vorhergehenden Ansprüche, **dadurch gekennzeichnet, dass** an dem Federelement (103) des Batteriezellhalters (101, 102) ein Federkontaktelement (104) angeordnet ist, wobei das Federkontaktelement (104) vom Federelement (103) in Richtung der Oberseite (150) ausgebildet und dazu eingerichtet ist, bei einer federelastischen Aufnahme einer Batteriezelle (110) die Federkraft (F) auf die Batteriezelle (110) zu übertragen.

5. Batteriemodul (100) nach einem der vorhergehenden Ansprüche, **dadurch gekennzeichnet, dass** der Batteriezellhalter (101) ein Anschlagselement (105) an einer Innenwand (170) der Vertiefung (130) zur Begrenzung der Biegung des Federelements (103) durch einen mechanischen Anschlag des Federelements (103) oder der Batteriezelle (110) aufweist.

6. Batteriemodul (100) nach einem der vorhergehenden Ansprüche , **dadurch gekennzeichnet, dass** der erste Batteriezellhalter (101) kraft- und/oder formschlüssig mit dem Deckel (301) verbunden ist.

7. Batteriemodul (100) nach einem der vorhergehenden Ansprüche, **dadurch gekennzeichnet, dass** der erste Batteriezellhalters (101) des Batteriemodulgehäuses und der zweite Batteriezellhalter (102) identisch ausgebildet sind.

8. Verfahren zur Herstellung eines Batteriemoduls nach einem der Ansprüche 1 bis 7, umfassend folgende Schritte
• Bereitstellung (610) eines ersten Batteriezellhalters (101),
• Einbringung (620) zumindest einer Batteriezelle (110) in den ersten Batteriezellhalter (101),
**dadurch gekennzeichnet, dass** die folgenden Schritte durchgeführt werden
• Anordnung (630) eines zweiten Batteriezellhalters (102) als Deckel an der Oberseite (150) des ersten Batteriezellhalters (101), und
• kraft- und/oder formschlüssige Verbindung (640) des ersten Batteriezellhalters (101) an den zweiten Batteriezellhalter (102), wodurch eine Federkraft (F) zu einer federelastischen Aufnahme der Batteriezelle (110) in einer Vertiefung des ersten Batteriezellhalters (101) erzeugt wird, wobei jede Batteriezelle (110) in einer Vertiefung (130) des ersten Batteriezellhalters (101) und in einer Vertiefung des zweiten Batteriezellhalters (102) in Längsrichtung der Batteriezelle (110) beidseitig federelastisch aufgenommen ist.
